# EUROPEAN PATENT APPLICATION

(11) **EP 4 414 812 A1**
(43) Date of publication of application: **14.08.2024**
(21) Application number: 23305162.2
(22) Date of filing: 07.02.2023
(51) Int. Cl.: G06F 3/01, A47C 15/00

(54) **HAPTIC DEVICE COMPRISING ONE OR MORE HAPTIC ACTUATORS**

(71) Applicant: Go Touch VR, 59000 Lille (FR)
(72) Inventor: VEZZOLI, Eric, 59000 LILLE (FR); KWEK, Rex, 138538 SINGAPORE (SG)
(74) Representative: RVDB

(57) **Abstract**

There is provided a haptic device comprising foam configured to support at least a user body part (200) and a set of haptic actuators comprising at least a haptic actuator (22), each haptic actuator (22) being arranged in an opened cavity (24) formed into the foam (21), the opened cavity (24) having an opening oriented toward the outside of the haptic device. At least a part of the opening is closed with a first sheet (23) interfaced to the foam (21) through an interface element, each haptic actuator (22) being fixed to an inner surface (231) of the first sheet (21) facing the opened cavity (24), each haptic actuator (22) being arranged at a distance from an inner surface (211) of the opened cavity.

## Description

### FIELD

The present application generally relates to the field of haptic and, in particular, to haptic device(s), also known as haptic feedback device(s), configured to render haptic effect(s) on one or more parts of a user's body.

### BACKGROUND

The present section is intended to introduce the reader to various aspects of art, which may be related to various aspects of at least one exemplary embodiments of the present application that is described and/or claimed below. This discussion is believed to be helpful in providing the reader with background information to facilitate a better understanding of the various aspects of the present application.

Haptic technology broadly refers to any technology recreating the sense of touch in a user interface by applying force, vibration, motion and other feelings such as temperature, to provide information to an end user, for example in addition to visual and audio information when rendering multimedia contents.

Haptic feedback covers a wide range of possible stimulation embodiments and includes tactile haptic technology. Tactile haptic feedback (or tactile haptic effect) refers to sensations such as vibration, friction, or micro-deformation, which may be obtained using a haptic device, which corresponds to, or comprises, an arrangement of one or more haptic actuators. For example, vibrotactile effects might be obtained with the use of haptic devices such as ERMs (Eccentric Rotating Mass), LRAs (Linear Resonant Actuators), large bandwidth actuators like VCM (Voice Coil Motors), PZT (Piezoelectric Actuators), pneumatic actuators, SMA (Shape Memory Alloy) actuators or EAP (Electroactive Polymer) actuators.

Haptic feedback finds application in many domains and is for example commonly used in arcade games and in virtual reality systems to increase the feeling of immersion. A person willing to experiment haptic feedback has to wear or use one or more haptic devices, which needs to be comfortable to increase user's acceptance. The integration of haptic actuators, such as vibrotactile actuators, in haptic device to be worn by a user may be a source of discomfort for the user.

### SUMMARY

The following section presents a simplified summary of at least one exemplary embodiment in order to provide a basic understanding of some aspects of the present application. This summary is not an extensive overview of an exemplary embodiment. It is not intended to identify key or critical elements of an embodiment. The following summary merely presents some aspects of at least one of the exemplary embodiments in a simplified form as a prelude to the more detailed description provided elsewhere in the document.

According to a first aspect of the present application, there is provided a haptic device comprising foam configured to support at least a part of user's body and a set of haptic actuators comprising at least a haptic actuator, each haptic actuator of the set being arranged in an opened cavity formed into the foam, the opened cavity having an opening oriented toward the outside of the haptic device, at least a part of the opening being closed with a first sheet, the first sheet being fixed to an interface element interfacing the first sheet with the foam, each haptic actuator being fixed to an inner surface of the first sheet facing the opened cavity, each haptic actuator being arranged at a distance from an inner surface of the opened cavity.

In an exemplary embodiment, the haptic device further comprises a second sheet arranged on an outer surface of the first sheet, the second sheet being configured to be in contact with the user body part and adhere with the user body part.

In an exemplary embodiment, the second sheet corresponds to a cover element of the haptic device covering the foam, the second sheet corresponding to the interface element.

In an exemplary embodiment, the foam comprises an outer peripheral area delimiting the opening and supporting a peripheral part of the inner surface of the first sheet.

In a further exemplary embodiment, the first sheet is linked to the foam via at least one flexible element corresponding to the interface element, a first end of the at least one flexible element being attached to the inner surface of the first sheet and a second end opposite to the first end being anchored into the foam, the at least one flexible element extending into the opened cavity from the inner surface.

In another exemplary embodiment, the at least one flexible element extends into the opened cavity from the inner surface orthogonally to the inner surface.

In a further exemplary embodiment, the haptic device further comprises an elastic joint arranged along an inner contour of the opened cavity on the side of the opening, the elastic joint joining the inner contour of the opened cavity to an outer contour of the first sheet in a resting position of the first sheet.

In an additional exemplary embodiment, the at least one flexible element and the elastic joint are configured to allow a displacement of the first sheet between the resting position and an activation position, the displacement being generated by a movement of the haptic actuator.

In a further exemplary embodiment, the second sheet adjoining the first sheet to form a sheet stacking, the elastic joint joining the inner contour of the opened cavity to an outer contour of the sheet stacking in a resting position of the sheet stacking.

In an exemplary embodiment, the haptic actuator is arranged at a center of the inner surface.

In an additional exemplary embodiment, the haptic actuator corresponds to a vibrotactile actuator.

In another exemplary embodiment, the haptic actuator is configured to move the first sheet along at least one axis, the at least one axis:
- belonging to a plane comprising the first sheet; and/or
- being orthogonal to the plane.

In a further exemplary embodiment, the first sheet is made of a material corresponding to:
- wood;
- metal; or
- plastic.

In another exemplary embodiment, the second sheet is made of a material corresponding to:
- silicon;
- tissue;
- leather; or
- plastic.

In an additional exemplary embodiment, the haptic device corresponds to a chair or a headset.

The specific nature of at least one of the exemplary embodiments as well as other objects, advantages, features and uses of said at least one of exemplary embodiments will become evident from the following description of examples taken in conjunction with the accompanying drawings.

### BRIEF DESCRIPTION OF THE DRAWINGS

Reference will now be made, by way of example, to the accompanying drawings which show exemplary embodiments of the present application, and in which:
**Figure 1** shows a schematic perspective representation of a haptic device, in accordance with at least one exemplary embodiment;
**Figure 2** shows a first schematic sectional representation of a part of the haptic device of figure 1 comprising a haptic actuator, in accordance with at least one exemplary embodiment;
**Figure 3** shows a second schematic sectional representation of a part of the haptic device of figure 1 comprising a haptic actuator, in accordance with at least one exemplary embodiment;
**Figure 4** shows a third schematic sectional representation of a part of the haptic device of figure 1 comprising a haptic actuator, in accordance with at least one exemplary embodiment;
**Figure 5** shows a fourth schematic sectional representation of a part of the haptic device of figure 1 comprising a haptic actuator, in accordance with at least one exemplary embodiment;
**Figure 6** shows a schematic representation of some elements of the part of the haptic device represented on figures 4 and 5, in accordance with at least one exemplary embodiment.

Similar reference numerals may have been used in different figures to denote similar components.

### DESCRIPTION OF EXEMPLARY EMBODIMENTS

At least one of the exemplary embodiments is described more fully hereinafter with reference to the accompanying figures, in which examples of at least one of the exemplary embodiments are illustrated. An exemplary embodiment may, however, be embodied in many alternate forms and should not be construed as limited to the examples set forth herein. Accordingly, it should be understood that there is no intent to limit exemplary embodiments to the particular forms disclosed. On the contrary, the disclosure is intended to cover all modifications, equivalents, and alternatives falling within the spirit and scope of the present application.

At least one of the aspects generally relates to a haptic device comprising one or more haptic actuators. The haptic device is configured to be at least locally in contact with one or more parts of a user's body. Part(s) of the haptic device may for example rest against the one or more parts of the user's body.

Examples of equipment or apparatus that may correspond to the haptic device include head mounted display devices (HMD, see-through glasses), wireless (e.g., Bluetooth^{®}) connected wearable haptic devices, mousepad, palm rest, chair, desk, XR headset, headphones, bracelet, head and/or lumbar support device or chair, or any other device suitable for rendering haptic effect(s) onto one or more parts of the user's body being in contact with the haptic device.

The haptic device corresponds for example to a chair, headphones, backrest, wrist rest for the mouse, wrist rest for the keyboard, headphones padded foam.

The haptic device comprises advantageously one or more haptic actuators each arranged in a cavity formed into foam, which is adapted to support the body part of the user in contact with the haptic device at the location of the haptic actuator. The cavity is shaped in such a way to be opened with an opening facing toward the outside of the haptic device. A first sheet closes at least partially the opening. The first sheet is fixed to an interface element that is configured to interface the first sheet with the haptic device. The haptic actuator is fixed to the inner surface of the first sheet, i.e., the face facing the inside of the cavity, and is arranged at a distance of the inner surface of the cavity.

With such an arrangement, the haptic actuator has no contact with the foam and forces and/or vibrations generated by the haptic actuator may be transmitted to the part of user's body through the first sheet.

Such an arrangement enables to improve the transmission of the haptic effect rendered by the haptic actuator to the part of user's body, the loss of forces and/or vibrations into the foam being greatly limited as the haptic actuator has no direct contact with the foam.

In a same time, such an arrangement guarantees a high comfort to the user thanks to the foam, which is foreseen to support the part of user's body around the arrangement comprising the haptic actuator and the first sheet.

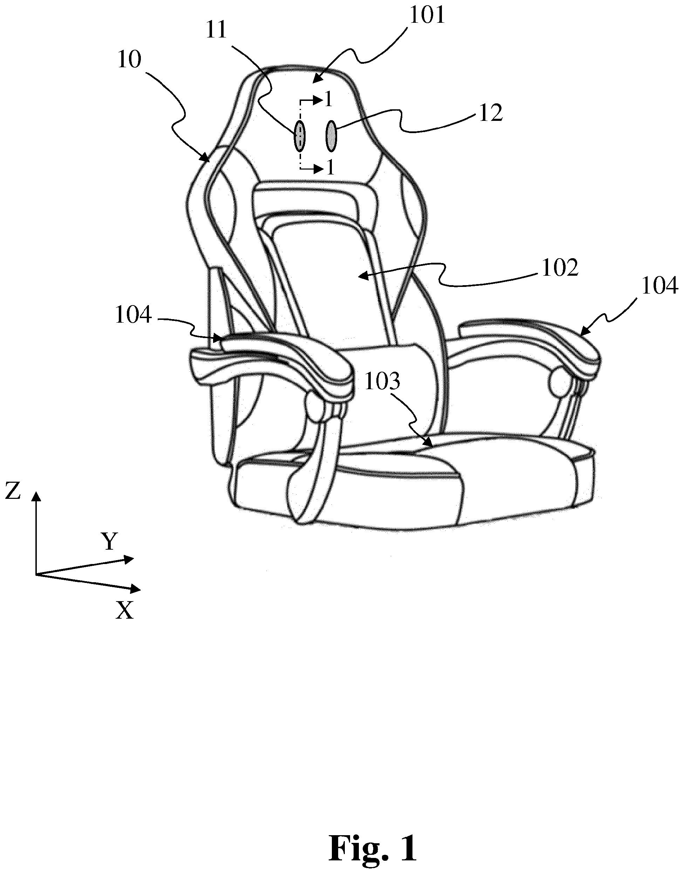

**Figure 1** illustrates a schematic partially perspective view of an exemplary embodiment of a haptic device.

The haptic device according to the example of figure 1 corresponds to a chair 10, e.g., a gaming seat, a theater seat, an operator seat, a vehicle seat, etc.

The chair 10 is represented in a perspective view in an orthonormal coordinate system represented with orthonormal axis X, Y and Z.

The chair 10 advantageously incorporates one or more haptic units 11, 12, each haptic unit 11, 12 comprising a haptic actuator configured to render one or more haptic effects onto one or more parts of a user's body in contact with the haptic units 11, 12.

Haptic units may be arranged in different parts or elements of the chair 10 each supporting or resting one or more user's body parts, e.g., in the headrest 101, backrest 102, seat 103, armrest 104 and/or leg rest.

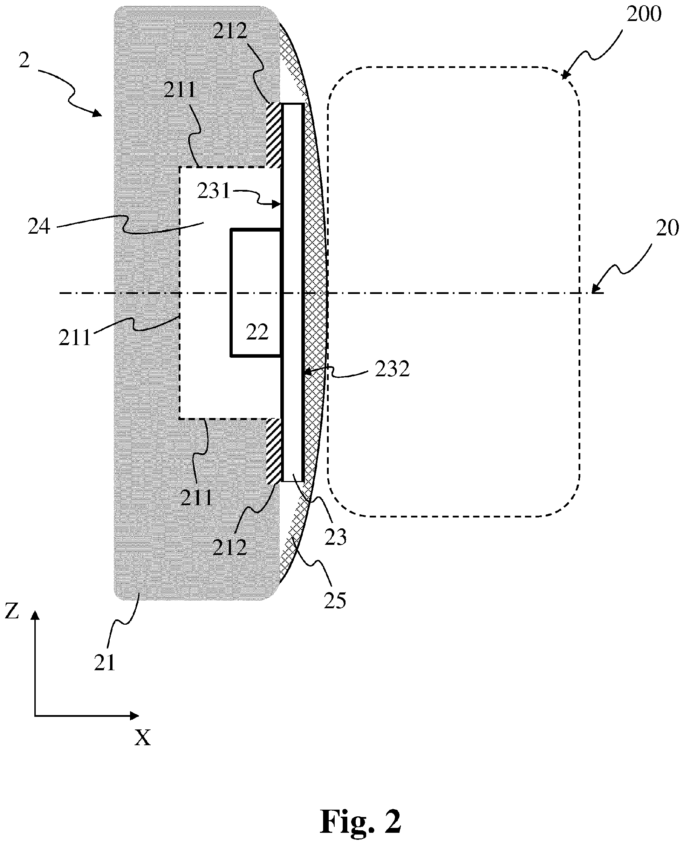

According to the specific example of figure 1, 2 haptic units 11, 12 are arranged in the headrest, for example in such a way to be in contact with the neck of a user seating in the chair 10.

The chair 10 may comprise any number of haptic units, for example 1, 2, 5, 10, 20 or more haptic units.

Each part or element of the chair 10 supporting at least a part of user's body, i.e., the headrest 101, the backrest 102, the seat 103 and the armrests 104 comprises foam, which is for example coated with a coating material adapted to be in contact with body part(s) of a user, such as textile, natural leather or synthetic leather.

Within the meaning of these principles, the foam included in the chair corresponds to any high elastically deformable material suitable for supporting the user's body or a part of user's body, either to provide comfort to the user resting on the haptic device or carrying/wearing the haptic device, or to prevent the haptic device from encountering the foam making up the cavity. Such a foam deforms when on contact with the user and returns to its previous or original shape when it is not in contact with the user.

The foam material (e.g., polyurethane, latex), structure and/or foam properties (e.g., density, resilience) may for example vary from a haptic device to another one, or from a part to another part of a same haptic device. For example, the foam material used in a chair may be different from the foam material used in a headset because the pressure exerted by the part of the user's body on the contact surface area is different (as the force and surface area are different). In another example, the foam material comprised in the seat 103 of the chair 10 may be different from the foam material comprised in the headrest 101 or in the armrests 104.

The foam corresponds for example to expanded polyurethane, silicon, shape memory foam, gel, polyurethane foam, PVC (Polyvinyl Chloride) foam, polyethylene foam, polystyrene foam, rubber foam (e.g., caoutchouc), nitrile butadiene rubber (NBR), ethylene propylene diene monomer (EPDM), or TPE (Thermoplastic Elastomer) foam.

**Figure 2** illustrates a schematic fragmentary sectional view of a part 2 of the haptic device 10 comprising a haptic unit 2, in accordance with a first exemplary embodiment.

The figure 2 corresponds to a sectional view of the haptic device 10 in the plane formed by axis X and Z of the orthonormal coordinate system (X,Y,Z) taken along axis 1-1 of figure 1.

Figure 2 shows a body part 200 of a user resting against the haptic unit 2.

The haptic unit 2 comprises an element 21, which corresponds to the foam assembly comprised in the headrest 101. The element 21 is called "foam" hereinafter.

The foam 21 forms a cavity 24 corresponding to a recess or chamber dug or bored into the foam 21. The cavity 24 is opened at one face, i.e., the face oriented toward the outside of the haptic device, i.e., the face oriented toward the body part 200.

The cavity 24 may be of any shape, for example corresponding to a cylinder, a half-sphere, a parallelepiped, a cuboid.

The haptic unit 2 also comprises a first sheet 23 arranged to close the opening of the cavity 24.

The first sheet 23 corresponds for example to a plate acting as an interface between the haptic actuator 22 resting against the inner face or surface 231 of the first sheet 23 and the body part 200 resting against the foam 21 and the haptic unit 2.

The first sheet 23 may be of any shape, for example corresponding to a rectangle, a square, a circle, an oval.

According to the non-limiting example of figure 2, a peripheral area of the inner surface of the first sheet 23 rests against an outer peripheral area 212 of the foam 21, the outer peripheral area 212 surrounding the opening of the cavity 24 and being illustrated with diagonal stripes on figure 2.

The inner surface 231 of the first sheet 23 is advantageously adapted or configured to slide on the foam 21 when the haptic actuator 22 is actuated and moves the first sheet 23.

The first sheet 23 is advantageously fixed to an interface element that is configured to interface the first sheet 23 with the haptic device 10, for example with the foam 21.

The first sheet 23 is fixed to the interface element 25 in a way to not adhere to the foam 21, the arrangement comprising the actuator 22, the first sheet 23 and the foam 21 being configured to enable a movement or vibration of the first sheet 23 (generated by the haptic actuator 22) while avoiding or minimizing the transfer of energy from the first sheet 23 to the foam 21. It enables to optimize or maximize the transfer of the vibration from the haptic actuator 22 to the user body part via the first sheet 23 and the interface element.

The first sheet 23 is for example glued to the interface element 25 via the outer surface 232 of the first sheet 23, which ensures to keep the first sheet 23 in position.

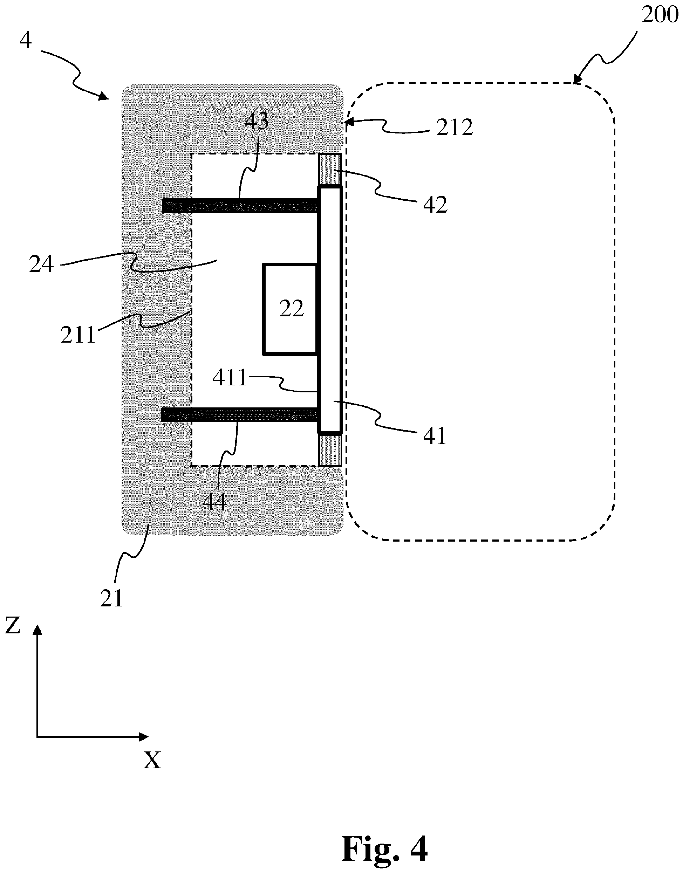

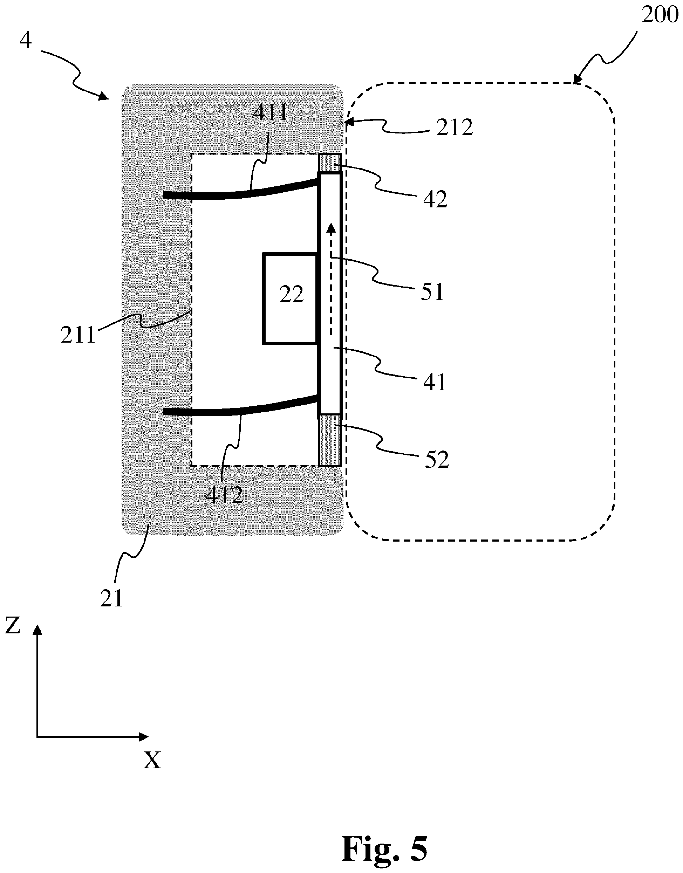

The interface element corresponds for example to:
- an element 25 having a size greater than the size of the first sheet 23 and fixed to the foam 21, for example by adhesive bonding or anchored to the foam with mechanical fastening, at the periphery of the interface element 25;
- a cover of the haptic device 10 coating notably the foam 21, the cover being for example a tissue, a plastic material, or natural or synthetic leather; and/or
- at least one flexible element 43, 44 as described hereinafter with regard to figures 4 and 5.

The first sheet 23 may be made in any material adapted to transfer vibrations and/or forces generated by the haptic actuator 22 to the user body part 200. The first sheet 23 is for example made of a rigid material, e.g., plastic, wood, resin or metal.

The surface finish of the outer surface of the interface element 25 (which is in contact with the user body part 200) is for example adapted to improve adherence between the first sheet and the user body part 200, in order to improve the vibration transfer to the user body part 200. Depending on the material of the first sheet and the outer surface finishing, the friction coefficient between the outer surface of the interface element 25 and the skin of the user body part 200 is for example between 0.4 and 0.8.

The haptic actuator 22 is for example a vibrotactile actuator, like ERM (Eccentric Rotating Mass), LRA (Linear Resonant Actuator), large bandwidth actuator like VCM (Voice Coil Motor), PZT (Piezoelectric Actuator), pneumatic actuators, SMA (Shape Memory Alloy) actuators or EAP (Electroactive Polymer) actuators.

The haptic actuator 22 is configured to generate vibration along one or more axis, for example along a longitudinal axis 20 (according to X axis) and/or along a transversal axis (according to Z axis) of the haptic actuator 22. Vibrations generated by the haptic actuator 22 are transferred to the first sheet 23 following one or several directions, depending on:
- the elastic characteristics of the first sheet 23 (material coefficient of elasticity and shape);
- the link mechanical properties between the first sheet 23 and the foam 21; and/or
- the link mechanical properties between the haptic actuator 22 and the first sheet 23.

The haptic actuator 22 is for example glued to the first sheet 23 inner surface 231, the haptic actuator 22 staying within the cavity 24 far from the walls (made of foam 21) defining the opened cavity 24, i.e., at a distance of the inner surface 211 of the walls, called foam inner surface 211 For example, haptic actuator 22 is centered on first sheet 23 internal surface 231, a gap separates the actuator from foam 21. The dimension of the gap is defined in such a way as to avoid any contact between the haptic actuator 22 and the walls of the cavity 24, including when the actuator vibrates and when the user body part 200 is leaning against, and compressing, the foam 21.

The haptic actuator 22 is for example glued to the first sheet 23 by adhesive bonding or anchored with any mechanical fastening known to the skilled person in the art.

The distance between the haptic actuator 22 and the foam inner surface 211 is for example comprised between 2 and 40 mm, depending for example on the size of the haptic actuator 22. For example, the greater the size of the haptic actuator 22, the greater the size of the cavity 24 and the greater of the distance between the outer surface of the haptic actuator 22 and the inner surface of the cavity 24.

The size of the haptic actuator 22 is for example comprised between 2x2x2 mm and 45x20x20 mm, depending for example on the sensitivity of the body part the haptic actuator 22 is associated with. For example, the sensitivity of the legs or the back of a user is lower than the sensitivity of the user's hands. The sensation of a haptic effect on the legs or on the back requires a haptic actuator with greater size than the size of a haptic actuator for the sensation of a haptic effect on the hands. For example, a higher acceleration or a larger amplitude of the displacement of the haptic actuator 22 movement is needed when generating a haptic effect on the legs or the back compared to the acceleration or amplitude of the displacement for a haptic effect to be sensed by the hands.

Size and/or shape of the cavity 24 depend for example on the size/shape of the haptic actuator 22, on the location of the haptic unit 2 in the haptic device 10 and/or on the type of the haptic device 10.

The size of the first sheet 23 depends on the size of the opening of the cavity 24. When the first sheet 23 has a rectangular shape (respectively circular shape), the height (respectively the diameter) of the first sheet 23 (along the Z axis) is for example comprised between 10 and 40 mm. The thickness of the first sheet 23 depends for example on the material of the first sheet 23 and is for example comprised between 0.5 to 2 mm.

The haptic actuator 22 is for example controlled and powered by a controller arranged in the haptic device 10, the haptic actuator being for example connected to the controller via wired connection (not shown). The controller is for example connected to a haptic engine, e.g., a computer, via a wired or a wireless connection. The controller receives, from the haptic engine, haptic signal(s) transporting haptic data (e.g., amplitude and frequency) representative of the haptic effect to be generated by the haptic actuator 22. The controller controls the haptic actuator 22 according to the received haptic signal(s).

According to a first example, the haptic actuator 22 is for example controlled to generate vibrations according to an axis orthogonal to the longitudinal axis 20 of the haptic actuator 22 (for example along the Z axis and/or the Y axis). The vibrations are for example generated by the movement of an inertial mobile element of the haptic actuator 22 in translation along to the one or more axis orthogonal to the longitudinal axis 20. Thanks to the inertia of the mobile element in movement inside the haptic actuator, the haptic actuator moves and drives the first sheet 23 to which it is hooked. As the first sheet 23 is thin and large, the first sheet 23 is flexible. The first sheet 23 moves or translates (and eventually deforms) consequently according to the movement of the mobile element of the haptic actuator 22, while the peripheral part of the first sheet 23 slides on the outer peripheral area 212 of the foam 21. The movement of the mobile element of the haptic actuator 22 makes the first sheet 23 locally vibrating or oscillating for example according to the Z axis, depending on the frequency and amplitude of the driving haptic signal received by the haptic actuator 22.

According to a second example, the haptic actuator 22 is for example controlled to generate vibrations according to the longitudinal axis 20 of the haptic actuator 22, i.e., according to the X axis. The first sheet 23 moves or deforms accordingly, i.e., according to the X axis.

According to a third example, the haptic actuator 22 is for example controlled to generate vibrations according to the longitudinal axis 20 of the haptic actuator 22 and according to one or more axis orthogonal to the longitudinal axis 20 of the haptic actuator 22, for example according to the Z and/or Y axis.

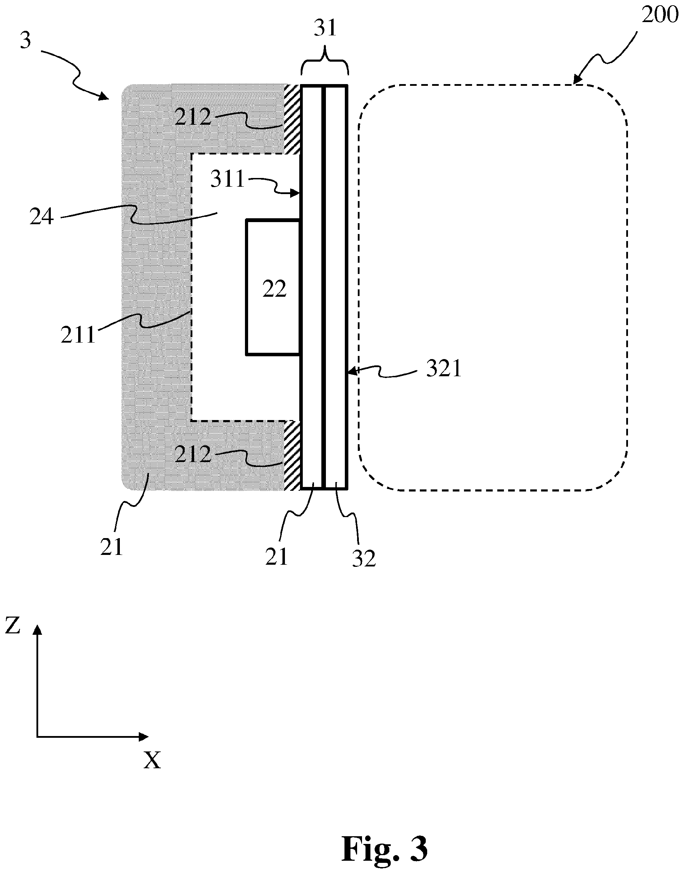

**Figure 3** illustrates a schematic fragmentary sectional view of a haptic unit 3, in accordance with a second exemplary embodiment.

The haptic unit 3 is similar to the haptic unit 2 illustrated on figure 2. The haptic unit corresponds to an alternative embodiment of the haptic unit 2, elements common to the haptic unit 3 and haptic unit 2 being identified with the same reference numbers.

According to the alternative embodiment of figure 3, a second sheet 32 is arranged on the outer surface 232 of the first sheet 23, the second sheet 32 interfacing the first sheet 23 (and the haptic actuator 22 consequently) with the user body part 200.

The second sheet 32 corresponds for example to the interface element 25 of figure 1, for example to the cover of the haptic device 10 coating the foam 21.

According to a variant, the second sheet 32 is an intermediate sheet between the first sheet 23 and the interface element 25.

The first sheet 23 and the second sheet 32 form a sheet stacking 31, i.e., a stacking of different layers.

According to a specific embodiment, an outer surface 321 of the second sheet is adapted to be in contact with the part of user's body and adhere with this part of user's body 200 to transmit the vibration effect generated by the haptic actuator 22 and the first sheet 23 to the user body part 200.

The size of the second sheet 32 is for example equal to the size of the first sheet 23. The second sheet 32 is for example made in a material different from the material of the first sheet 23. The second sheet 32 is for example adjoined to the first sheet 23 by adhesive bonding or first sheet 23 and second sheet 32 are made of co-laminated material.

The material of the second sheet 32 corresponds for example to one of the following materials: silicon, tissue, leather, plastic (e.g., PVC (Polyvinyl Chloride), PU (polyurethane) or PET (Polyethylene terephthalate)).

Such a stack 31 makes it possible to take advantage both of the mechanical properties like rigidity of the first material making up the first sheet 23 and of the surface properties like higher friction of the second material making up the second sheet 32 to maximize mechanical coupling with the skin. The material of the second sheet 32 may for example match with the material of the coating covering the foam 21 of the haptic device 10, when appropriate, i.e., when the properties of the coating material allow sufficient adhesion to the skin to transmit the vibratory effect to the part of user's body 200.

**Figure 4** illustrates a schematic fragmentary sectional view of a haptic unit 4, in accordance with a third exemplary embodiment.

The figure 4 corresponds to a sectional view of the haptic device 10 in the plane formed by X and Z axis of the orthonormal coordinate system (X,Y,Z) taken along axis 1-1 of figure 1.

Like the haptic unit 2 and the haptic unit 3 described with reference to figures 2 and 3, respectively, the haptic unit 4 comprises foam 21, into which is formed a cavity 24 corresponding to a recess or chamber dug or bored into the foam 21. The cavity 24 is opened at the face oriented toward the outside of the haptic device 10, i.e., the face oriented toward the body part 200.

The haptic unit 4 comprises an element or sheet 41 that partially closes the opening. The element 41 corresponds to the first sheet 23 of the haptic unit 2 or to the sheet stacking made of the first sheet 23 and the second sheet 32 of the haptic unit 3.

According to this third exemplary embodiment, the sheet 41 has no direct contact with the foam 21.

The sheet 41 is adapted to transmit vibrations or displacements generated by the haptic actuator 22 to the part of user's body 200. The sheet 41 is also configured to deform itself to adapt to the shape of the par of user's body 200 when the part of user's body 200 rests against the haptic unit 4.

The haptic unit 4 further comprises an elastic joint 42 (illustrated with vertical stripes) arranged along an inner contour of the opened cavity 24 on the side of the opening. The elastic joint 42 connects the foam 21 along opened cavity 24 inner contour to the sheet 41 outer contour (which faces the opened cavity 24 inner contour of) to close the opening in a resting position of the sheet 41, i.e., when the haptic actuator 22 is not operated and the sheet 41 not moving.

The elastic joint 42 is made of a material that may be squeezed and/or stretched out according to the sheet 41 displacement induced by the haptic actuator 22 when the haptic actuator 22 is operated to generate a haptic effect. The part of the joint connected to the foam 21 is nearly static while the part of the joint connected to the first sheet 41 follows first sheet 41 displacement.

The elastic joint 42 isolates the sheet 41 from the foam 21 and prevents or at least reduces the transmission of vibrations from the sheet 41 to the foam 21.

According to a first example, the elastic joint 42 is only attached or fixed to the foam 21, for example by adhesive bonding, and not to the outer contour of the sheet 41.

According to a second example, the elastic joint 42 is only attached or fixed to the outer contour of the sheet 41, for example by adhesive bonding, and not to the foam 21.

According to a third example, the elastic joint 42 is attached or fixed to both the foam 21 and to the sheet 41 outer contour, for example by adhesive bonding.

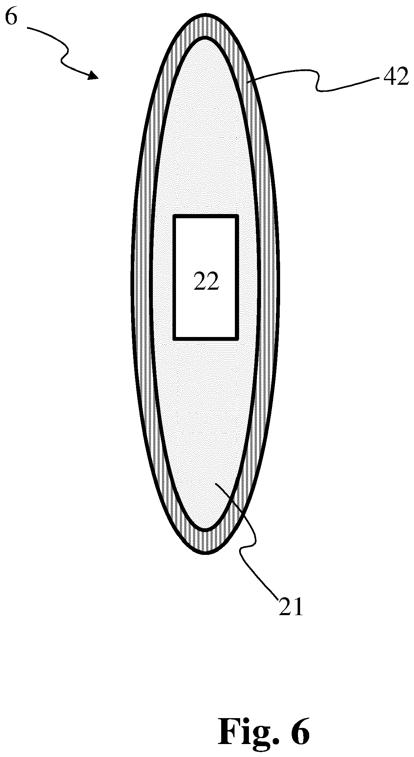

**Figure 6** shows a schematic view of an assembly 6 comprising the sheet 41 surrounded by the elastic joint 42, the haptic actuator 22 being arranged at the center of the sheet 41. The assembly 6 is illustrated on figure 6 as seen from the inside of the cavity 24.

According to the third exemplary embodiment, the sheet 41 is mechanically linked to the foam 21 via one or more flexible elements 43, 44.

A first tip or end of each flexible element 43, 44 is fastened to the sheet 42 inner surface 411 and a second tip or end, opposite to the first end, is anchored into the foam 21, each flexible element 43, 44 extending into the opened cavity 24 from the inner surface 411.

According to a variant, the second end of each flexible element is attached to the inner surface of the cavity, i.e., to the foam 21, by adhesive bonding without entering into or penetrating the foam 21. An enlarged basis can be managed at each flexible element tip in order to increase contact surface and improve bonding quality.

According to a non-limiting example embodiment, the flexible elements 43, 44 extend into the opened cavity 24 from the inner surface 411 of the sheet 41 orthogonally to the inner surface 411.

According to another example, a first end of the flexible element 43, 44 is attached to the inner surface 411 of the sheet and the second end of the flexible element is attached to a wall forming the cavity 24 that is essentially orthogonal to a plane of the opening.

2, 3 or 4 flexible elements are for example provided to hang the sheet 41 on the foam 21. The flexible elements 43, 44 are for example distributed at a distance from the periphery of the sheet 41, for example at equal distance from each other.

A flexible element 43, 44 may for example correspond to a stem or a rod.

According to another example, a flexible element 43 may have a rectangular cross section.

According to a further example, the sheet 41 is linked to the foam via only one flexible element. According to this example, the flexible element may correspond to a spring, the haptic actuator 22 being arranged inside the spring at the first end of the spring that is attached to the inner surface 41 of the sheet 41.

The one or more flexible element 43, 44 are arranged so as to allow movement or displacement of the sheet 41 relative to the foam 21 along one or more axes, that is to say along the X, Y and/or Z axis. The one or more flexible elements 43, 44 are elastically deformable according to the one or more X, Y and/or Z axis. The flexible elements 43, 44 may for example be squeezed or stretched out according to the one or more X, Y and/or Z axis to enable any displacement of the sheet 41 under the action of the haptic actuator 22.

**Figure 5** illustrates the haptic unit 4 with a displacement of the sheet 41.

According to the non-limiting example of figure 5, the haptic actuator 22 is running and generates a movement or translation of the sheet 41 upwardly according to the Z axis, the displacement being represented with the dotted line arrow 51.

According to this example, the sheet 41 moves along the axis, for example up and down alternatively, by reacting to haptic actuator 22 input. The sheet 41 displacement results on a flexible element 43, 44 tip translation that deforms the flexible elements 43, 44. When the haptic actuator 22 stop running, the sheet 41 returns to its rest position under the effect of the flexible elements 43, 44, which are elastically deformable.

When the sheet 41 moves upwardly, the upper part of the elastic joint 42 is squeezed and a gap 52 may appear between the lower part of the elastic joint and the contour of the sheet 41 facing the lower part of the elastic joint 42, when the elastic joint 42 is not attached to the outer contour of the sheet 41.

When the elastic joint 42 is attached to the outer contour of the sheet 41, the upper part of the elastic joint 42 is squeezed when the sheet 41 moves upwardly, and the lower part of the elastic joint 42 is stretched out.

The elastic joint 42 acts as a vibration absorber and reduces or prevents the transmission of the vibration to the foam 21, the vibrational effect generated by the haptic actuator 22 being transmitted to the user body part 200 in the best possible manner.

The terminology used herein is for the purpose of describing particular embodiments only and is not intended to be limiting. As used herein, the singular forms "a", "an", and "the" may be intended to include the plural forms as well, unless the context clearly indicates otherwise. It will be further understood that the terms "includes/comprises" and/or "including/comprising" when used in this specification, may specify the presence of stated, for example, features, elements, and/or components but do not preclude the presence or addition of one or more other features, elements, components, and/or groups thereof. Moreover, when an element is referred to as being "responsive" or "connected" to another element, it may be directly responsive or connected to the other element, or intervening elements may be present. In contrast, when an element is referred to as being "directly responsive" or "directly connected" to other element, there are no intervening elements present.

It is to be appreciated that the use of any of the symbol/term "/", "and/or", and "at least one of", for example, in the cases of "A/B", "A and/or B" and "at least one of A and B", may be intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Various numeric values may be used in the present application. The specific values may be for example purposes and the aspects described are not limited to these specific values.

It will be understood that, although the terms first, second, etc. may be used herein to describe various elements, these elements are not limited by these terms. These terms are only used to distinguish one element from another. For example, a first element could be termed a second element, and, similarly, a second element could be termed a first element without departing from the teachings of this application. No ordering is implied between a first element and a second element.

Reference to "one exemplary embodiment" or "an exemplary embodiment" or "one implementation" or "an implementation", as well as other variations thereof, is frequently used to convey that a particular feature, structure, characteristic, and so forth (described in connection with the embodiment/implementation) is included in at least one embodiment/implementation. Thus, the appearances of the phrase "in one exemplary embodiment" or "in an exemplary embodiment" or "in one implementation" or "in an implementation", as well any other variations, appearing in various places throughout this application are not necessarily all referring to the same embodiment.

Similarly, reference herein to "in accordance with an exemplary embodiment / example / implementation" or "in an exemplary embodiment / example / implementation", as well as other variations thereof, is frequently used to convey that a particular feature, structure, or characteristic (described in connection with the exemplary embodiment / example / implementation) may be included in at least one exemplary embodiment / example / implementation. Thus, the appearances of the expression "in accordance with an exemplary embodiment / example / implementation" or "in an exemplary embodiment / example / implementation" in various places in the specification are not necessarily all referring to the same exemplary embodiment / example / implementation, nor are separate or alternative exemplary embodiment / examples / implementation necessarily mutually exclusive of other exemplary embodiments / examples / implementation.

Reference numerals appearing in the claims are by way of illustration only and shall have no limiting effect on the scope of the claims. Although not explicitly described, the present embodiments / examples and variants may be employed in any combination or sub-combination.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

## Claims

1. A haptic device (10) comprising foam (21) configured to support at least a user body part (200) and a set of haptic actuators (22) comprising at least a haptic actuator, each haptic actuator (22) of said set being arranged in an opened cavity (24) formed into said foam (21), said opened cavity (24) having an opening oriented toward the outside of said haptic device (10),
at least a part of said opening being closed with a first sheet (23; 41),
said first sheet being fixed to an interface element interfacing said first sheet (23; 41) with said foam (21),
said each haptic actuator (22) being fixed to an inner surface (231; 411) of said first sheet (23; 41) facing said opened cavity (24), said each haptic actuator (22) being arranged at a distance from an inner surface (211) of said opened cavity (24).

2. The haptic device according to claim 1, further comprising a second sheet (32) arranged on an outer surface (232) of said first sheet (23), said second sheet (32) being configured to be in contact with said user body part (200) and adhere with said user body part (200).

3. The haptic device according to claim 2, wherein said second sheet (32) corresponds to a cover element of said haptic device (1) covering the foam (21), said second sheet (32) corresponding to said interface element.

4. The haptic device according to one of claims 1 to 3, wherein said foam (21) comprises an outer peripheral area (212) delimiting said opening and supporting a peripheral part of the inner surface (231) of said first sheet (23).

5. The haptic device according to claim 1 or 2, wherein said first sheet (41) is linked to said foam (21) via at least one flexible element (43, 44) corresponding to said interface element, a first end of said at least one flexible element (43, 44) being attached to the inner surface (411) of said first sheet (41) and a second end opposite to said first end being anchored into said foam (21), said at least one flexible element (43, 44) extending into said opened cavity from said inner surface (411) of the first sheet (41).

6. The haptic device according to claim 5, wherein said at least one flexible element (43, 44) extends into said opened cavity (21) from said inner surface (411) of the first sheet (41) orthogonally to said inner surface (411) of the first sheet (41).

7. The haptic device according to claim 5 or 6, further comprising an elastic joint (42) arranged along an inner contour of said opened cavity (21) on the side of said opening, said elastic joint (42) joining said inner contour of said opened cavity (24) to an outer contour of said first sheet (41) in a resting position of said first sheet (41).

8. The haptic device according to claim 7, wherein said at least one flexible element (43, 44) and said elastic joint (42) are configured to allow a displacement of said first sheet (41) between said resting position and an activation position, said displacement being generated by a movement of said haptic actuator (22).

9. The haptic device according to claim 7 or 8 in dependency to claim 2, wherein said second sheet (32) adjoining said first sheet (23) to form a sheet stacking (33), said elastic joint joining (42) said inner contour of said opened cavity to an outer contour of said sheet stacking (33) in a resting position of said sheet stacking.

10. The haptic device according to one of claims 1 to 9, wherein said haptic actuator (22) is arranged at a center of said inner surface (231; 411) of the first sheet (23; 41).

11. The haptic device according to one of claims 1 to 10, wherein said haptic actuator (22) corresponds to a vibrotactile actuator.

12. The haptic device according to one of claims 1 to 11, wherein said haptic actuator (22) is configured to move said first sheet (23; 41) along at least one axis, said at least one axis:
- belonging to a plane comprising said first sheet; and/or
- being orthogonal to said plane.

13. The haptic device according to one of claims 1 to 12, wherein said first sheet (23) is made of a material corresponding to:
- wood;
- metal; or
- plastic.

14. The haptic device according to claim 2, wherein said second sheet (32) is made of a material corresponding to:
- silicon;
- sissue;
- leather; or
- a polymer of plastic.

15. The haptic device according to one of claims 1 to 14, wherein said haptic device (10) corresponds to a chair or a headset.
